# FASCICULE DE BREVET EUROPEEN

(11) **EP 0 863 617 B1**
(45) Date de publication et mention de la délivrance du brevet: **02.03.2005**
(21) Numéro de dépôt: 98200563.9
(22) Date de dépôt: 23.02.1998
(51) Int. Cl.: H04B 1/16

(54) **"Système de transmission comportant au moins une station satellite munie de circuits alimentés à partir d'une source d'énergie et station satellite convenant à un tel système".**
Funksystem mit mindestens einer sekundären Station mit einer Schaltung durch eine Stromquelle gespeist
Transmission system comprising at least one secondary station with circuits powered from a power source

(30) Priorité: 04.03.1997 FR 9702556
(43) Date de publication de la demande: 09.09.1998
(73) Titulaire: Koninklijke Philips Electronics N.V., 5621 BA Eindhoven (NL)
(72) Inventeur: Jacobs, Jan, 75008 Paris (FR)
(74) Mandataire: Chaffraix, Jean

(56) Documents cités:
- EP-A- 0 051 774
- US-A- 5 568 513

## Description

La présente invention concerne un système de transmission comportant au moins une station d'émission pour émettre des blocs d'informations et au moins une station satellite recevant lesdits blocs, qui est munie de circuits alimentés à partir d'au moins une source d'énergie et dans lequel au moins un desdits circuits est muni d'un moyen de coupure de sa tension d'alimentation mis en oeuvre durant au moins un bloc.

L'invention concerne aussi une station satellite convenant à un tel système.

L'invention trouve des applications importantes notamment dans le domaine des systèmes de radiomobiles cellulaires du genre GSM, ETACS, AMPS et autres...

Lorsqu'on est utilisateur d'un tel système, on est soumis au problème de l'autonomie des stations satellites mobiles personnelles qui est liée à leur consommation en énergie électrique. De plus, ces stations doivent avoir un encombrement limité et un poids aussi faible que possible. Il y a donc intérêt à limiter la consommation électrique de ces stations personnelles de sorte que l'accumulateur soit aussi petit et aussi léger que possible pour une autonomie convenable.

Un des circuits, grand consommateur d'énergie, est l'oscillateur local de réception asservi en phase. Pour économiser de l'énergie, il est connu du document de brevet EP 0 051 774 d'arrêter l'oscillateur asservi et de conserver sa tension de commande aux armatures d'un condensateur. Ainsi, il est possible d'arrêter cet oscillateur dans de nombreuses occasions.

Il est aussi connu du document US 5,568,513 de couper l'alimentation pendant la réception de certains blocs de façon à économiser encore de l'énergie.

La présente invention propose un système du genre mentionné dans le préambule dans lequel l'économie d'énergie est améliorée.

Pour cela, un tel système est remarquable en ce que les moyens de détection agissent sur lesdits moyens de coupure lorsqu'une majorité de blocs de répétition identiques est décelée dans une trame.

L'idée de l'invention consiste à profiter du système dans lequel les informations sont véhiculées dans des blocs avec notamment une certaine redondance. Il arrive donc que des stations mobiles ne soient concernées que par quelques blocs. Il est donc possible d'arrêter quelques circuits de la station mobile durant les blocs qui ne présentent pas d'intérêt et d'économiser ainsi de l'énergie électrique.

Selon une caractéristique importante de l'invention, il est prévu dans les stations mobiles un circuit intégré, contenant différents constituants, qui est muni d'une commande pour couper l'alimentation de certains constituants.

Ainsi selon cette caractéristique, à l'intérieur d'un circuit intégré, seuls les constituants qui n'ont aucune fonction à l'état d'attente de la station mobile ont leur alimentation coupée.

La description suivante faite en regard des dessins ci-annexés, le tout donné à titre d'exemple non limitatif, fera bien comprendre comment l'invention peut être réalisée.
La figure 1 montre un système conforme à l'invention.
La figure 2 montre une station mobile conforme à l'invention.
La figure 3 montre un diagramme temps explicitant les périodes de fonctionnement de l'oscillateur local, appareil téléphonique conforme à l'invention.

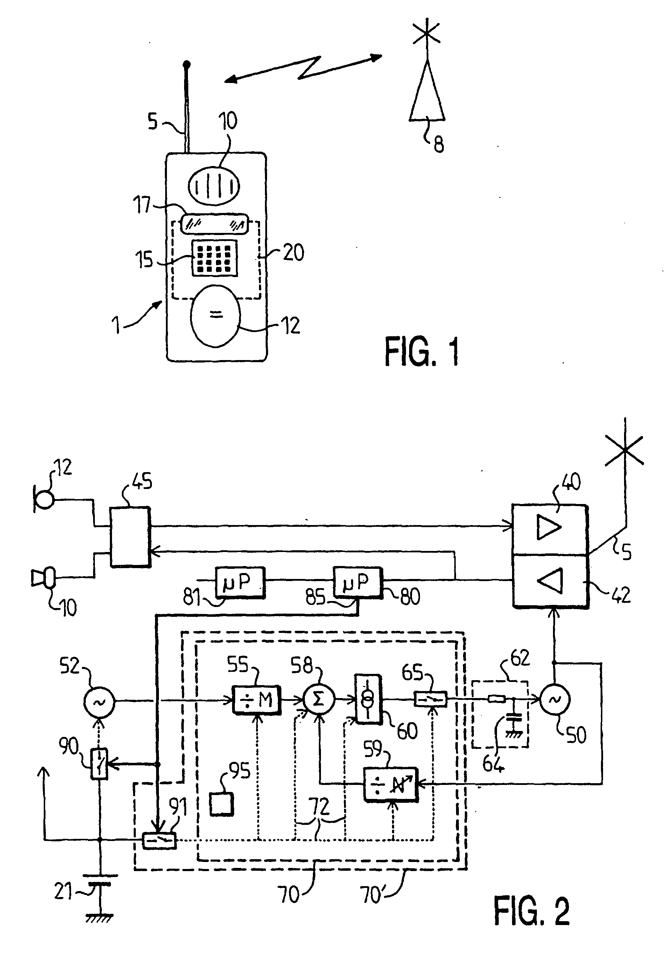

A la figure 1, la référence 1 indique une station mobile conforme à l'invention. Cette station est munie d'une antenne 5 qui lui permet de recevoir et d'émettre des ondes vers une station de base 8 d'un réseau radioélectrique du genre téléphonie cellulaire GSM, ETACS, AMPS et autres. La station mobile 1 comporte un écouteur 10, un microphone 12, un clavier 15 et un écran de visualisation 17. Les pointillés représentent une partie électronique 20 située à l'intérieur du poste.

Cette partie 20 alimentée par un accumulateur 21 est montrée plus en détail à la figure 2. Elle comprend un ensemble d'émission 40 et un ensemble de réception 42 pour émettre et pour recevoir différentes informations usuelles dans la technique de la téléphonie cellulaire. Ces parties émission et réception sont reliées à un microphone 12 et à l'écouteur 10 via un organe de traitement 45. La partie réception nécessite un oscillateur local 50 qui est inséré dans une boucle d'asservissement de phase.

Cette boucle est constituée d'un oscillateur de référence 52 suivi d'un diviseur de fréquence fixe 55, d'un comparateur de phase 58 pour comparer les phases des signaux fournis par le diviseur 55 aux phases des signaux provenant d'un diviseur variable 59 dont le taux de division fixe finalement la fréquence de cet oscillateur local 50. Le comparateur 58 pilote un circuit à pompe 60 qui délivre des courants à un circuit de filtrage 62 représenté sur la figure par une cellule RC comportant notamment un condensateur 64. Le circuit à pompe est un circuit à trois états c'est-à-dire que son impédance de sortie peut présenter une valeur infinie. Ceci est schématisé sur la figure 2 par un interrupteur 65. Ainsi la tension aux armatures du condensateur 64 se maintient un certain temps lorsque l'interrupteur 65 est ouvert. Les différents constituants qui viennent d'être décrits, c'est-à-dire les éléments 55, 58, 59, 60 et 65 peuvent être disposés dans un circuit intégré 70. La référence 72 montre les lignes d'alimentation de ces éléments précités.

Différents microprocesseurs 80 et 81 effectuent les différents traitements sur les données fournies par l'ensemble de réception 42. Le microprocesseur 80 fournit, sur une ligne 85, le résultat d'un "vote" effectué sur des blocs d'informations émis depuis la station de base 8. L'autre microprocesseur 81 est chargé de la gestion du fonctionnement de la station mobile 1.

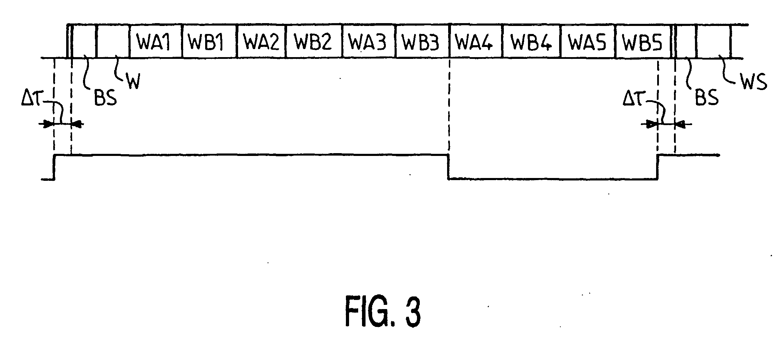

L'invention est surtout mise à profit dans le mode d'attente. Selon ce mode, la station mobile est en attente d'un appel et capte donc une trame de signaux tels que ceux montrés à la figure 3 en A. Cette trame de signaux se rapporte aux signaux de la norme TACS, E-TACS.

Selon cette norme, les signaux commencent par une séquence ou bloc BS qui est destinée à la synchronisation au niveau des éléments binaires et une séquence WS qui est une séquence de synchronisation au niveau de la trame. A ces préambules de synchronisation, succède une répétition de 5 fois des mots correspondant au numéro de l'appelé. Ce numéro est transmis, d'une manière entrelacée, cinq fois dans la trame. C'est-à-dire que certaines stations mobiles écoutent les mots WA1 à WA5 tandis que d'autres écoutent les mots WB1 à WB5. Pour déterminer le numéro appelé, un "vote" est effectué sur cette répétition de cinq mots. Si un mot se répète trois fois identiquement dans la trame, on déclare que c'est ce mot qui doit être considéré. Ainsi si les trois premiers blocs sont identiques, l'invention propose donc de couper l'alimentation de différents composants très tôt. Mais, si c'est le premier, le deuxième et le quatrième bloc qui sont identiques, l'alimentation sera coupée après ce quatrième bloc.

L'invention propose, selon une de ses caractéristiques, de couper l'alimentation de la boucle d'asservissement de phase dès qu'un mot a été déterminé. L'interrupteur 65 est mis à l'état ouvert de sorte que la tension aux armatures du condensateur 64 se maintienne pendant la coupure de l'alimentation. Ainsi, le verrouillage en phase, lors de la prochaine apparition de la tension d'alimentation sera facilité.

Les coupures des éléments sont montrées, à la figure 2, par des interrupteurs 90 et 91 qui permettent, pour le premier, de couper l'alimentation de l'oscillateur de référence 52 et pour le second, de couper l'alimentation du circuit intégré 70.

La figure 3 montre, en B, le signal qui agit sur les différent interrupteurs. Sur cette figure 3, on a référencé par Δτ un temps de garde pour remettre l'alimentation sur les éléments de sorte que le traitement puisse se faire dès que cela devient nécessaire sans perte d'informations.

On a représenté à la figure 2, par des pointillés mixtes, une autre configuration pour un autre circuit intégré 70', c'est-à-dire qu'il est prévu sur ce circuit un moyen de coupure pour certains des composants qui lui sont intégrés, un ensemble de circuits 95 devant rester alimenté.

Bien que l'on ait décrit une procédure impliquant un "vote", l'invention s'applique à tous les cas où les blocs n'ont aucun intérêt pour la station qui les capte. Là encore l'alimentation peut être couplée.

## Revendications

1. Système de transmission comportant au moins une station d'émission pour émettre des blocs d'informations dont certains blocs dits blocs de répétition sont émis une pluralité de fois et au moins une station satellite recevant lesdits blocs, qui est munie de circuits alimentés à partir d'au moins une source d'énergie, et dans lequel au moins un desdits circuits est muni d'un moyen de coupure de sa tension d'alimentation mis en oeuvre durant au moins un bloc,
**caractérisé en ce que** les moyens de détection agissent sur lesdits moyens de coupure lorsqu'une majorité de blocs de répétition identiques est décelée dans une trame.

2. Système selon la revendication 1 **caractérisé en ce que** l'un des circuits est un oscillateur muni d'une entrée pour recevoir une commande d'asservissement de phase et **en ce qu'**il est prévu un organe de mémorisation pour mémoriser la grandeur de commande pendant l'activation des moyens de coupure.

3. Station mobile convenant à un système selon la revendication 1 ou 2 **caractérisée en ce qu'**elle comporte un circuit intégré contenant différents constituants et qui est muni d'une commande pour couper l'alimentation de certains constituants.

## Patentansprüche

1. System zur Übertragung mit mindestens einer Sendestation zum Senden von Informationsblöcken, von denen bestimmte Blöcke mit der Bezeichnung Wiederholungsblöcke mehrmals gesendet werden, und mindestens einer sekundären Station zum Empfangen der besagten Blöcke, die mit Schaltungen ausgestattet ist, die von mindestens einer Energiequelle gespeiste werden, und in dem mindestens eine der besagten Schaltungen mit einem Mittel zur Unterbrechung ihrer Versorgungsspannung während mindestens einem Block ausgestattet ist,
**dadurch gekennzeichnet, dass** die Detektionsmittel auf die besagten Unterbrechungsmittel einwirken, wenn in einem Raster eine Mehrheit von identischen Wiederholungsblöcken erkannt wurde.

2. System nach Anspruch 1, **dadurch gekennzeichnet, dass** eine der Schaltungen ein Oszillator ist, der mit einem Eingang zum Empfangen einer Steuerung für die Phasenverriegelung ausgestattet ist, und dadurch, dass ein Organ zur Speicherung vorgesehen ist, um die Größe der Steuerung während der Aktivierung der Unterbrechungsmittel abzuspeichern.

3. Für ein System nach Anspruch 1 oder 2 geeignete mobile Station, **dadurch gekennzeichnet, dass** sie eine integrierte Schaltung enthält, die unterschiedliche Bestandteile aufweist und die mit einer Steuerung für die Unterbrechung der Versorgung von bestimmten Bestandteilen ausgestattet ist.

## Claims

1. A transmission system comprising at least a transmitter station for transmitting data blocks of which certain blocks called repetition blocks are transmitted a number of times and at least one secondary station receiving said blocks, the secondary station including circuits whose power is supplied by at least one energy source, and in which at least one of said circuits includes a cutting means for cutting off its supply voltage utilized during at least one block, **characterized in that** the detection means act on said cutting means when a majority of identical repetition blocks is detected in one frame.

2. The system as claimed in claim 1, in which one of the circuits is an oscillator which has an input for receiving a command to phase-lock and in that a storage element is provided for storing the magnitude of the command when the power cutting means is activated.

3. A mobile station suitable for a system as claimed in claim 1 or 2, **characterized in that** it comprises an integrated circuit containing various constituent parts and which includes a command for cutting off the power supply of certain constituent parts.
